# EUROPEAN PATENT SPECIFICATION

(11) **EP 3 574 764 B1**
(45) Date of publication and mention of the grant of the patent: **14.12.2022**
(21) Application number: 18175421.9
(22) Date of filing: 31.05.2018
(51) Int. Cl.: A23B 7/148, B60P 3/20, F25D 17/04

(54) **A REFRIGERATED TRANSPORT CONTAINER**
GEKÜHLTER TRANSPORTBEHÄLTER
CONTENEUR DE TRANSPORT RÉFRIGÉRÉ

(43) Date of publication of application: 04.12.2019
(73) Proprietor: Thermo King Corporation, Minneapolis, MN 55420 (US)
(72) Inventor: FERRER BLAS, Miguel Angel, 08980 Barcelona (ES); STAVOVA, Petra, 25301 Hostivice (CZ); MANOHAR G, Praveen, Bangalore Karnataka 560093 (IN)
(74) Representative: Haseltine Lake Kempner LLP

(56) References cited:
- JP-A- 2012 136 287
- US-A1- 2014 137 598
- US-A1- 2017 127 705
- US-A1- 2017 355 518

## Description

### BACKGROUND

The disclosure relates to a refrigerated transport container and a method of operating a refrigerated transport container.

Refrigerated transport containers are used to transport cargo within a refrigerated atmosphere inside the container. Such cargo may typically comprise foodstuffs, particularly fresh produce such as fruit and vegetables. It is known to prolong the shelf life of fresh produce by refrigeration. It has also been proposed that the shelf life may be extended by storing fresh produce in an environment with a modified (relative ambient air) or controlled quantity of component gases, for example a relatively low concentration of carbon dioxide. Fresh produce in storage tends to consume oxygen and produce carbon dioxide as a waste product, such that without ventilation, a concentration of carbon dioxide would increase and a concentration of oxygen would be reduced. Whilst a shelf life of fresh produce may be extended by storage in an environment having a relatively low oxygen concentration (e.g. lower than external atmospheric air), fresh produce may be damaged by storage at very low oxygen concentrations.

It has been proposed to provide a selectively permeable membrane over an outlet of a container which permits carbon dioxide to transfer from a cargo space and through the membrane at a relatively faster rate than oxygen, such that carbon dioxide as a waste product can be discharged whilst preventing excessive depletion of oxygen.

US2017/127705 describes a method to help control atmosphere in a storage space, in particular to provide a desired amount of nitrogen to the storage space to replace oxygen and carbon dioxide while removing the same amount of air from the storage space.

JP2012136287 provides a container that allows gas concentration to be adjusted to a desired value by ventilating the container using a ventilation filter.

Further relevant prior art can be found in US2014/137598A1.

### SUMMARY

The invention is defined in the attached independent claims to which reference should now be made. Further, optional features may be found in the sub-claims appended thereto.

The present invention provides a refrigerated transport container according to claim 1, comprising: a cargo space for containing an interior gas; a gas transfer membrane configured to transfer component gases at different rates (such as transfer of carbon dioxide at a different rate to oxygen), the gas transfer membrane having an interior side to receive interior gas from the cargo space and an exterior side in communication with a gas exchange portion of an exterior gas pathway; an air mover configured to drive an exterior gas flow along the exterior gas pathway for gas transfer over the membrane; and a flow controller configured to selectively activate the air mover to control transfer of a controlled component gas (such as carbon dioxide) across the gas transfer membrane.

The air mover may be a fan. The air mover may be upstream or downstream of the gas exchange portion of the exterior gas pathway. Whilst one side of the gas transfer membrane may be referred to as an exterior side it will be appreciated that this side is not required to be external to the container. The prefix "exterior" is intended to denote that the respective side is in communication with the exterior gas pathway which may convey gas received from outside the container.

The gas transfer membrane may have a greater permeability to a controlled component gas than another component gas. For example, the gas transfer membrane may have a greater permeability to carbon dioxide than to oxygen; or a greater permeability to ethylene than to carbon dioxide or oxygen.

The flow controller may be configured to activate the air mover in response to determining that a level of the controlled component gas (such as carbon dioxide) in the cargo space is at or above an exchange threshold, and to deactivate the air mover in response to determining that a level of the controlled component gas (such as carbon dioxide) in the cargo space is at or below a deactivation threshold.

The refrigerated transport container further comprises a heater upstream of the gas exchange portion of the exterior gas pathway to heat the exterior gas flow. By heating the exterior gas flow, a relative humidity of the exterior gas flow may be reduced and condensation of gas at the membrane may be inhibited.

The refrigerated transport container may further comprise a heater controller configured to control the heater to raise the temperature of the exterior gas by a threshold increase.

In other words, the controller may be configured to operate the heater to maintain a substantially constant power or heat input of the heater despite variations in the temperature of the exterior gas upstream of the heater. In examples where the flow rate of the exterior gas is variable, the heater controller may be configured to operate the heater to maintain a substantially constant heat input to the exterior gas per unit flow (e.g. per unit mass or volume). Accordingly, the heater power may be varied dependent on a parameter indicative of flow rate, for example as a function of an operating parameter of an air mover which drives the exterior gas flow through the second volume, or as a function of an output of a flow meter configured to monitor the exterior gas flow.

The refrigerated transport container may further comprise a heater controller configured to vary heat input to the exterior gas flow based on monitoring a temperature of exterior gas.

A temperature upstream of the heater or downstream of the heater may be monitored. The refrigerated transport container may comprise a temperature sensor to monitor a temperature of exterior gas upstream or downstream of the heater. The heater controller may be configured to operate the heater based on an output of the temperature sensor.

By varying the heat input to the exterior gas flow based on monitoring a temperature of the gas, a heat input appropriate to the temperature of the gas can be selected to inhibit condensation.

The heater controller may be configured to heat the exterior gas flow to a target downstream temperature for supply to the exterior side of the membrane. In other words, the controller may be configured to control the power of the heater to compensate for variations in the temperature of the exterior gas upstream of the heater. Such control may be based on monitoring the temperature of the exterior gas upstream of the heater, or may be based on monitoring the temperature of the heated exterior gas (i.e. downstream of the heater) using a feedback loop.

The controller may be configured to heat exterior gas having an upstream temperature in a first temperature range to a target downstream temperature and heat exterior gas having an upstream temperature in a second temperature range by a constant heat input or to raise the temperature by a threshold increase (i.e. by a constant amount). For example the heater controller may be configured to heat exterior gas which is below a minimum threshold (such as -5°C or 0°C) to a higher minimum temperature, such as 0°C or 5°C. The heater controller may be configured to cause a constant temperature increase (for example 2°C, or 5°C, or 10°C) or to provide a corresponding constant heat input to exterior gas which is within a control temperature range. For example, exterior gas which is within a control range of between -5°C to 20°C upstream of the heater may be heated by a constant heat input or to cause a constant temperature increase. A lower temperature boundary of the control range may correspond to a minimum threshold as described above. The controller may be configured to apply a relatively lower constant heat input or no heat input to exterior gas having an upstream temperature above a maximum threshold upstream of the heater, for example 20°C.

The refrigerated transport container may comprise a gas exchange chamber separated from the cargo space by a partition. The gas transfer membrane may be provided in the gas exchange chamber so as to divide the gas exchange chamber into a first volume in communication with the interior side of the gas transfer membrane and a second volume in communication with the exterior side of the gas transfer membrane. There may be two openings in the partition. At least one of the openings may be provided with a respective exchange valve to selectively permit and prevent an exchange flow of interior gas from the cargo space through the first volume for gas transfer at the gas transfer membrane. The refrigerated transport container may comprise an exchange controller configured to open and close the or each exchange valve to control gas transfer between interior gas and exterior gas over the membrane. The second volume may correspond to the gas exchange portion of the exterior gas pathway.

The refrigerated transport container may further comprise: an evaporator heat exchanger for receiving a return flow of interior gas from the cargo space for cooling and an evaporator fan to drive the return flow. The evaporator fan may be configured to drive the exchange flow through the first volume.

The openings in the partition may be configured so that in use the exchange flow branches from and re-joins the return flow.

The exchange controller may be configured to switch between at least: an idle mode in which the exchange controller operates at least one exchange valve to be closed to prevent the exchange flow of interior gas from the cargo space through the first volume; and an active mode in which the exchange controller operates the or each exchange valve to be open to permit the exchange flow of interior gas from the cargo space through the first volume. The flow controller may operate the air mover to drive the exterior gas flow through the second volume in the active mode.

Alternatively or additionally, the exchange controller may be configured to switch between the idle mode and a passive mode in which the controller operates the or each exchange valve to be open to permit the exchange flow of interior gas from the cargo space through the first volume, and the air mover is inoperative.

Any controllers of the container may be provided separately or may be integrated. For example, the exchange controller for controlling the or each exchange valve may be integrated with the flow controller for controlling the air mover.

The refrigerated transport container may further comprise a gas sensor configured to monitor a parameter relating to the quantity of controlled component gas (such as carbon dioxide) in the interior gas, and the exchange controller may be configured to control opening and closing of the or each exchange valve based on the monitored parameter. For example, the monitored parameter may be a proportion by volume or a partial pressure of the controlled component gas (such as carbon dioxide). The exchange controller may control the or each exchange valve to open when the parameter is indicative of a quantity of the controlled component gas (such as carbon dioxide) at or above a threshold, and may close when the parameter is indicative of a quantity of the controlled component gas (such as carbon dioxide) at or below a threshold.

According to claim 9, the present invention provides a method of operating a refrigerated transport container in accordance with claim 1, the method comprising:
causing the air mover to drive an exterior gas flow along the exterior gas pathway for gas transfer over the membrane.

The method may comprise activating the air mover in response to determining that a level of the controlled component gas (such as carbon dioxide) in the cargo space is at or above an exchange threshold, and deactivating the air mover in response to determining that a level of the controlled component gas (such as carbon dioxide) in the cargo space is at or below a deactivation threshold.

The method further comprises heating exterior gas upstream of the gas exchange portion of the exterior gas pathway using a heater.

The method may comprise varying heat input to the exterior gas flow based on monitoring a temperature of exterior gas.

The method may comprise monitoring a temperature upstream of the heater or downstream of the heater. By varying the heat input to the exterior gas flow based on monitoring a temperature of the gas, a heat input appropriate to the temperature of the gas can be selected to inhibit condensation.

The heat input may be varied as described above with respect to the first aspect.

The refrigerated transport container may further comprise: a gas exchange chamber separated from the cargo space by a partition. The gas transfer membrane may be provided in the gas exchange chamber so as to divide the gas exchange chamber into a first volume in communication with the interior side of the gas transfer membrane and a second volume in communication with the exterior side of the gas transfer membrane. There may be two openings in the partition, at least one of the openings being provided with a respective exchange valve to selectively permit and prevent an exchange flow interior gas from the cargo space through the first volume for gas transfer at the gas transfer membrane. There may be an exchange controller configured to open and close the or each exchange valve to control gas transfer between interior gas and exterior gas over the membrane.

The method may further comprise: opening the or each exchange valve to permit an exchange flow of interior gas from the cargo space through the first volume so that there is gas transfer at the gas transfer membrane; and closing the or each exchange valve to prevent the exchange flow of interior gas through the first volume to prevent gas transfer between interior gas in the cargo space and the exterior gas.

The exchange flow may be driven through the first volume by an evaporator fan associated with an evaporator heat exchanger of the container, for receiving a return flow of interior gas from the cargo space for cooling.

The method may comprise switching between at least: an idle mode in which the exchange controller operates at least one exchange valve to be closed to prevent the exchange flow of interior gas from the cargo space through the first volume; and an active mode in which the exchange controller operates the or each exchange valve to be open to permit the exchange flow of interior gas from the cargo space through the first volume. The flow controller may operate the air mover to drive the exterior gas flow through the second volume in the active mode.

Alternatively or additionally, the method may comprise switching between the idle mode and a passive mode in which the controller operates the or each exchange valve to be open to permit the exchange flow of interior gas from the cargo space through the first volume, and in which the air mover is inoperative. An unforced exterior gas flow may flow through the second volume when the air mover is inoperative, for example.

The method may comprise any feature of control or operation of the refrigerated transport container as described with respect to other aspects described herein.

### BRIEF DESCRIPTION OF THE DRAWINGS

The invention will now be described, by way of example only, with reference to the accompanying drawings, in which:
Figure 1 is a partial schematic cut-away side view of an example refrigerated transport container including a gas exchange module;
Figure 2 is a more detailed schematic cut-away side view of the gas exchange module as situated in the refrigerated transport container; and
Figure 3 is a flow diagram of an example method of operating a refrigerated transport container.

### DETAILED DESCRIPTION

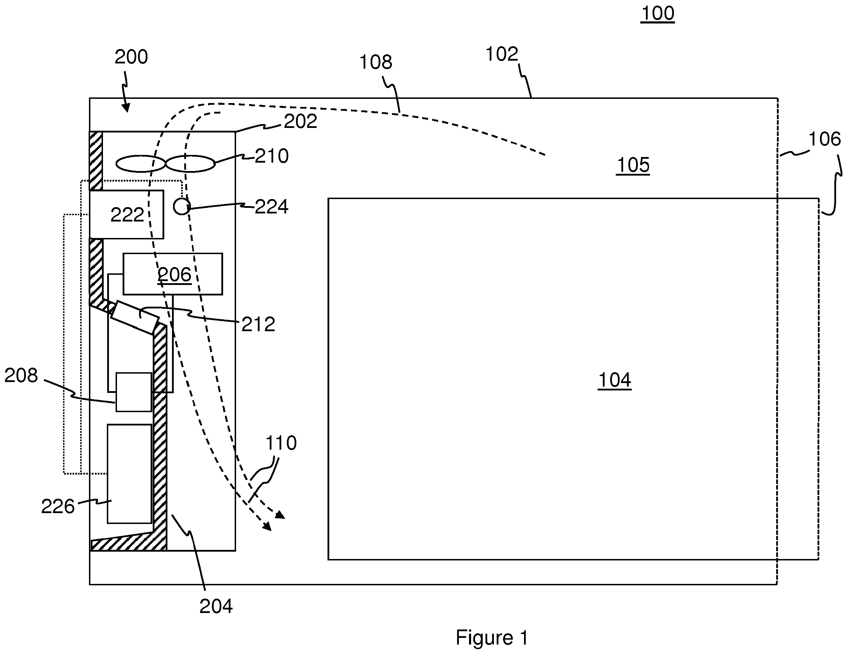

**Figure 1** schematically shows a transport container 100 comprising external walls 102 which separate an internal atmosphere of interior gas from an external atmosphere of exterior gas. By way of example, cargo 104 is provided in a cargo space 105 of the container, such as a load of fresh fruit and vegetables. Figure 1 is a partial view showing a first end of the container which comprises a refrigeration module 200. An end of the container and of the cargo 104 away from the first end of the container is not shown for simplification of the drawing, as indicated by continuation lines 106.

The refrigeration module 200 is installed in the transport container to provide a refrigerated transport container. The refrigeration module 200 is generally provided at one end of the container adjacent a wall 102 of the transport container 100.

The refrigeration module 200 comprises a structural frame 202 which is within the container when installed in the container 100, and is open so as to permit a flow of return air 108 to be directed to components of the refrigeration module 200 as will be described below, and to deliver a flow of supply air 110 to the cargo space.

The refrigeration module 200 comprises an external wall 204 which may serve as an external wall of the transport container 100 separating the internal atmosphere of the container from the external atmosphere.

The example refrigeration module 200 comprises a refrigeration circuit including an evaporator 206 disposed on an inside of the external wall 204 and a condenser 208 disposed outside of the external wall 204. The refrigeration circuit may include a compressor, an expansion valve and flow lines connecting the components of the circuit as is known in the art so that in use the evaporator is configured to transfer heat from interior gas to the circulating refrigerant, and the condenser is configured to transfer heat from the refrigerant to exterior gas.

In this example an evaporator fan 210 is provided to direct a flow of return air 108 over the evaporator 206 to be cooled, and to then be directed to the cargo space as supply air 110. In this particular example, the refrigeration module is configured so that the return air flows downward through the refrigeration module, and the evaporator fan 210 is disposed upstream and therefore generally above the evaporator 206. However, in other examples the evaporator fan 210 may be disposed upstream or downstream relative the evaporator, and the particular orientation and direction of the flow therethrough may be different.

The refrigeration module further comprises a gas transfer module which in this example includes a gas exchange chamber 222 for gas transfer between interior gas and exterior gas, a gas sensor 224 for monitoring a parameter relating to the composition of interior gas, and a controller 226. As shown in Figure 1, in this example the controller 226 is disposed outside of the external wall 204 of the refrigeration module, whereas the gas exchange chamber 222 and the gas sensor 224 are disposed inside of the external wall 204.

In this particular example, the gas exchange chamber 222 and the gas sensor 224 are disposed between the evaporator fan 210 and the evaporator 206 so that the evaporator fan 210 is configured to direct a flow of return air 108 through the gas exchanger chamber 222 and past the sensor 224. However, other relative positions may be adopted in other examples, and a flow of return air may be conveyed through the gas exchange chamber by an upstream or downstream air mover such as an evaporator fan.

As shown in Figure 1, the refrigeration module 200 further comprises a fresh air vent 212 which is configured to selectively open and close to permit a flow of fresh air into the cargo space 105 as is known in the art.

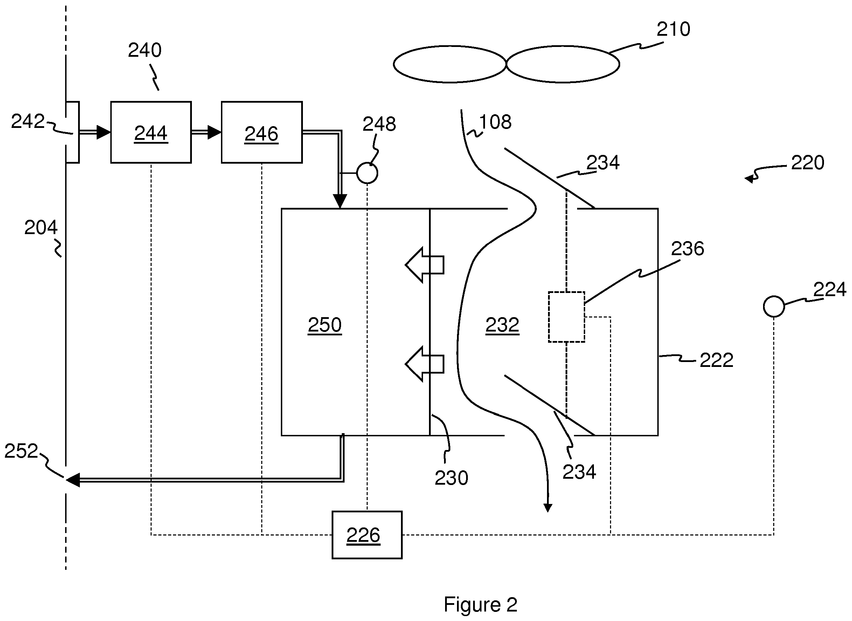

**Figure 2** shows the gas exchange module 220 of Figure 1 in further detail. The gas exchange module 220 is shown in the same position relative the evaporator fan 210 as described above with respect to Figure 1. Figure 2 also shows the gas exchange module 220 in relative position to a portion of an external wall of the container, which in this particular example is formed by the external wall 204 of the refrigeration module at the first end of the container.

In this example a gas transfer membrane 230 is provided within the gas exchange chamber 222 so as to divide the gas exchange chamber into a first volume 232 in communication with an interior side of the gas transfer membrane and a second volume 250 in communication with an exterior side of the gas transfer membrane. The gas exchange chamber 222 can take any suitable shape but in this example is generally cuboidal. There are two openings in a wall of the gas exchange chamber 222 that forms a partition between the gas exchange chamber and the cargo space. The openings open into the first volume 232 of the gas exchange chamber 222 to permit an exchange flow of interior gas through the first volume 232 from the cargo space. The openings may be configured so that in use the exchange flow branches from and re-joins the return flow (i.e. the flow of return air 108 in Figure 1). In this example both openings are provided with respective exchange valves 234 to selectively permit and prevent an exchange flow of interior gas from the cargo space through the first volume 232 for gas transfer at the gas transfer membrane. However, in other examples there may be only one exchange valve 234 for opening and closing one of the openings to permit or prevent such an exchange flow. In this example the exchange valves 234 are configured for simultaneous actuation between open and closed positions by action of an actuator 236.

In this example the second volume 250 forms a gas transfer portion of an exterior gas pathway 240 for conveying an exterior gas flow along the exterior side of the membrane 230, as will be described in further detail below.

In other examples there may be no gas exchange chamber. For example, the gas transfer membrane 230 may be open to the cargo space and may separate the cargo space from an exterior gas pathway.

The gas transfer membrane 230 is a selectively permeable membrane which is configured to transfer a controlled component gas at a different rate to another component gases, and in this particular example is configured to transfer carbon dioxide (i.e. as a controlled component gas) at a different rate to oxygen. A rate of gas transfer of a particular molecule may be a function of a difference in partial pressure (a measure of concentration) of the respective molecule on opposing sides of the membrane. Accordingly, a rate of gas transfer of a molecule may be influenced by a static pressure difference over the membrane, and/or by a difference in concentration of the respective gas molecule. The gas transfer membrane may comprise any suitable material, an example of which is Polyether block amide, or PEBA, available under the trade name PEBAX^{®} from Arkema SA. In this example the gas transfer membrane 230 is provided as a planar sheet, but in other examples it may take any suitable form, such as a corrugated sheet or curved sheet. It may be provided in the form of a duct (e.g. a pipe or conduit) which is to transfer gas between an inside and outside of the duct.

As mentioned above, the gas transfer membrane 230 has an interior side to receive interior gas from the cargo space and an exterior side in communication with a gas exchange portion 250 of an exterior gas pathway 240. The exterior gas pathway 240 is configured to convey exterior gas (e.g. fresh air) from outside of the container and through the gas exchange portion 250.

The exterior gas pathway 240 extends from an air inlet configured to receive a flow of exterior gas in use to an air outlet configured to discharge the flow of exterior gas. In this particular example an air filter 242 is provided at the air inlet.

An air mover 244 is provided upstream of the gas exchange portion 250, for example a fan. The air mover is configured to drive a flow of exterior gas along gas flow pathway including the gas exchange portion 250 for gas transfer over the membrane. In other examples an air mover may be provided at any location along the exterior gas pathway 240.

A heater 246 is provided upstream of the gas exchange portion 250 and downstream of the air mover 244. In other examples the heater 246 may be provided upstream of the air mover 244. The heater is configured to heat exterior gas that flows along the exterior gas pathway 240 to the gas exchange portion 250.

A temperature sensor 248 is provided in the exterior gas pathway. The temperature sensor 248 can be provided at any position along the exterior gas pathway. In this particular example it is provided downstream of the heater 246 to monitor a temperature of heated exterior gas. However, in other examples it may be provided upstream of the heater 246 to monitor unheated exterior gas, for example.

In this example the controller 226 comprises a flow controller for controlling the air mover 244, a heater controller for controlling the heater 246, and an exchange controller for causing the exchange valves 234 to open or close. In this example each controller (flow, heater, exchange) is a module of an integrated controller 226. However, in other examples there may be separate controllers for controlling each respective component (where present).

As shown in Figure 2 the controller 226 is coupled to each of the air mover 244, the heater 246, the temperature sensor 248, the valve actuator 236 and the gas sensor 224 in order to carry out its respective functions, as will be described below.

The flow controller is configured to selectively activate the air mover 244 to cause a flow of exterior gas along the exterior gas pathway 240. By providing a flow of exterior gas, gas within the gas exchange portion 250 can be replenished with fresh exterior air so as to discharge gas transferred through the membrane 230 from the cargo space (for example carbon dioxide). This may sustain a relatively low proportion of carbon dioxide in the gas exchange portion 250 to permit carbon dioxide transfer (at least) through the membrane. Conversely, deactivation of the air mover may cause gas concentrations over the membrane to equilibrate so as to slow a rate of gas transfer through the membrane. Accordingly, selective activation of the air mover can be used to control carbon dioxide transfer across the gas transfer membrane.

In this example, the heater controller is configured to vary heat input by the heater 246 to the exterior gas flow based on monitoring a temperature of exterior gas using the temperature sensor 248. Heating the exterior gas may prevent condensation of the gas on the gas transfer membrane 230 (i.e. which may otherwise be caused by cooling of the exterior gas at the gas transfer membrane 230, or by cooling of the interior gas in the event that (unheated) exterior gas is cooler than interior gas). Without wishing to be bound by theory, it is thought that condensation of gas on the gas transfer membrane inhibits gas transfer through the membrane wherever the condensate rests on the membrane, reducing performance.

In some examples, the heater controller may control the heater to provide a constant heat input to the exterior gas (so as to effect a substantially constant temperature rise). Such operation may not be based on or require a temperature sensor. In other examples, the heater controller may control the heater based on the monitored temperature to target a constant temperature rise. There may be temperature sensors upstream and downstream of the heater for doing so.

In this particular example, the heater controller is configured to vary heat input to the exterior gas flow based on a temperature of exterior gas. By way of example, the heater controller is configured to vary the type of heating (or heating mode) when the temperature of the exterior gas upstream of the heater is within different ranges. It may not be necessary to directly monitor the temperature of exterior gas upstream of the heater. For example, a suitable control procedure may determine a heating mode based on the power of the heater, the downstream temperature and optionally the flow rate of exterior gas (as predetermined or monitored by a flow meter, for example). As will be appreciated, a higher power consumption of the heater would indicate a relatively larger temperature difference across the heater, which may be a function of flow rate (in examples where flow rate is variable).

For example, the heater controller may heat exterior gas in a cold temperature range below a minimum threshold (such as -5°C or 0°C) to a higher minimum temperature, such as 0°C or 5°C. This may prevent freezing of the gas transfer membrane which may otherwise damage it, particularly if condensate is present. Such heating may be controlled based on absolute temperature monitoring (i.e. targeting a particular downstream temperature rather than controlling a heat input to effect a substantially constant temperature rise irrespective of upstream temperature), for example by way of a feedback loop using the temperature of exterior gas downstream of the heater.

The heater controller may be configured to cause a constant temperature increase (for example 2°C, or 5°C, or 10°C) or to provide a constant heat input to exterior gas which is within an intermediate temperature range. For example, exterior gas which is within a temperature range of between -5°C to 20°C upstream of the heater may be heated by a constant heat input or to cause a constant temperature increase. A lower temperature boundary of the control range may correspond to a minimum threshold as described above with respect to the cold temperature range.

The heater controller may be configured to apply a relatively lower constant heat input or no heat input to exterior gas having an upstream temperature above a maximum threshold upstream of the heater, for example a maximum threshold of 20°C.

The exchange controller is configured to open and close the exchange valves (or the exchange valve, where only one is provided) to control gas transfer between interior gas and exterior gas over the membrane. As described above, gas transfer across the membrane may be a function of a difference in partial pressure over the membrane of a respective molecule, which may itself be a function of the relative concentration of the molecule and/or the static pressure on opposing sides of the membrane. Gas transfer may therefore occur when there is not equilibrium in the partial pressure of a respective molecule across the membrane.

When the exchange valves are open to permit an exchange flow of interior gas through the first volume 232, gas transfer may occur when there is not equilibrium across the membrane. When the exchange valves are then closed, gas transfer across the membrane may continue between gases within the gas exchange chamber 222 on either side of the membrane. However, such transfer is limited to the gases within the gas exchange chamber 222, and the interior gas within the cargo space is isolated from the membrane. Accordingly, the exchange valves enable the exchange flow to flow or be stopped so as to control gas transfer between interior gas in the cargo space and exterior gas.

In this example the exchange controller has an idle mode in which it operates the or each exchange valve to be closed to prevent flow of interior gas from the cargo space through the first volume, and an active mode in which it operates the or each exchange valve to be open to permit the exchange flow of interior gas from the cargo space through the first volume. In this example the flow controller is configured to operate the fan to drive the exterior gas flow through the second volume (i.e. the gas exchange portion of the exterior gas pathway) in the idle mode, and it is also configured to deactivate the fan in the idle mode.

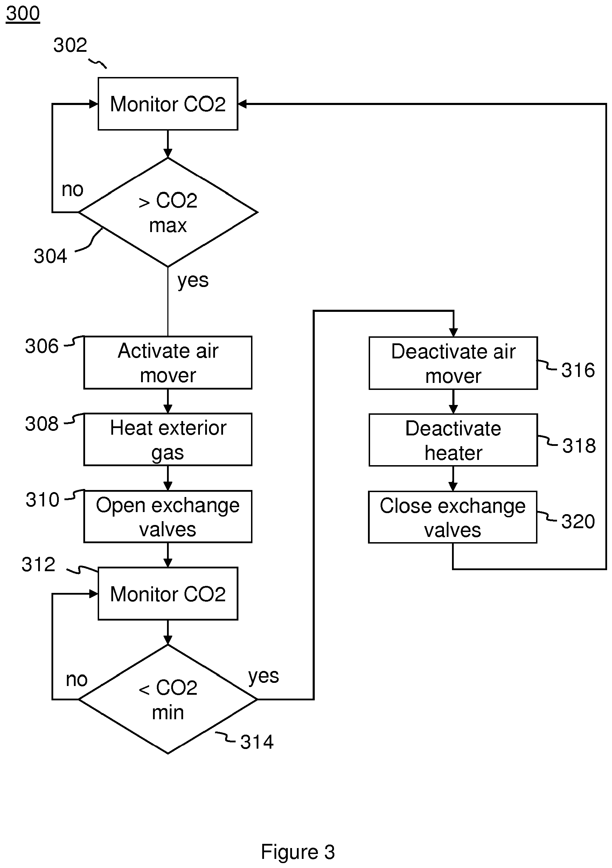

**Figure** 3 is a flow diagram of a method 300 of operating a refrigerated transport container. By way of example only, it will be described with reference to the refrigerated transport container of Figures 1 and 2.

In block 302, a concentration of carbon dioxide is monitored using the gas sensor 224. The gas sensor may be a NDIR (nondispersive infrared) sensor configured to monitor a parameter relating to a quantity of a component gas, such as carbon dioxide. Such monitoring may be done periodically, for example once every 5 minutes or less.

In block 304, the controller determines whether the concentration of carbon dioxide is above a threshold which will be referred to as CO2 max, for example a threshold corresponding to 5% carbon dioxide by volume. If the carbon dioxide concentration is below the threshold, the controller 226 takes no action and the method returns to block 302 to periodically monitor a concentration of carbon dioxide. The controller 226 is configured to take some action to reduce carbon dioxide concentration if it is above the CO2 max threshold, as follows.

In block 306, the controller 226 (as flow controller) activates the air mover in response to determining that a level of carbon dioxide in the cargo space is at or above the CO2 max threshold. This causes an exterior gas flow to be conveyed along the exterior gas pathway 240 for gas exchange at the membrane 230, as described above.

In block 308, the controller 226 (as heater controller) controls the heater to heat the exterior gas flow as described above, in response to determining that the level of carbon dioxide is at or above the CO2 max threshold. This may have the effect of reducing relative humidity to inhibit condensation, and also preventing freezing of the membrane and any condensate. The controller 226 may control the heat input to the exterior gas flow as described above.

In block 310, the controller 226 (as exchange controller) controls the exchange valves 234 to open in response to determining that the level of carbon dioxide is at or above the CO2 max threshold, to thereby permit an exchange flow of interior gas to flow through the first volume 232 for gas transfer over the membrane.

In various examples, the controller 226 may take any one of the actions at blocks 306, 308, 310, more than one, or all three. Such actions may have the effect of reducing a concentration of carbon dioxide in the interior gas as described above.

In block 312, the concentration of carbon dioxide is monitored using the gas sensor 224. Such monitoring may be done periodically as mentioned above. If it is determined that the concentration of carbon dioxide is above a predetermined minimum carbon dioxide threshold (referred to herein as CO2 min) for the interior gas such as a threshold corresponding to 4% by volume of carbon dioxide, then at block 314 no action is taken such that gas exchange over the membrane may continue. The method returns to periodically monitor the concentration of CO2 at block 312. In other examples the maximum and minimum CO2 thresholds may be higher or lower. It is thought that the shelf life of certain products may be extended by having an elevated CO2 concentration (i.e. relative ambient conditions) such as greater than 10%. Accordingly, thresholds may be selected in dependence on the cargo.

When it is determined at block 314 that the concentration of CO2 is below the CO2 min threshold, the controller 226 takes action to inhibit gas transfer from between interior gas in the cargo space and the exterior gas, as follows.

In block 316, the controller 226 (as flow controller) deactivates the air mover to stop a flow of exterior gas. In some examples, the exterior gas pathway 240 and/or the air mover 244 may be configured so that this prevents a flow of exterior gas along the exterior gas pathway 240. In other examples, deactivation of the air mover may only prevent a forced flow, and a passive flow of exterior gas may be established.

In block 318, the controller 226 (as heater controller) deactivates the heater to stop heating the exterior gas.

In block 320, the controller 226 (as exchange controller) causes the exchange valves to close to prevent flow of interior gas through the first volume 232.

In various examples, the controller 226 may take any one of the actions at blocks 316, 318, 320, more than one, or all three in response to determining that the carbon dioxide concentration is at or below the CO2 min threshold. The actions taken may correspond to those opposing actions of blocks 306, 308, 310 that were taken in response to determining that the carbon dioxide concentration was at or above the CO2 max threshold in the respective example.

The method returns to block 302 to periodically monitor the concentration of carbon dioxide as described above, and continues in a loop to maintain an atmosphere within the cargo space at a carbon dioxide concentration within a predetermined range.

## Claims

1. A refrigerated transport container (100) comprising:
a cargo space (105) for containing an interior gas;
a gas transfer membrane (230) comprising a selectively permeable membrane configured to transfer component gases at different rates, the gas transfer membrane (230) having an interior side to receive interior gas from the cargo space (105) and an exterior side in communication with a gas exchange portion (250) of an exterior gas pathway (240);
an air mover (244) configured to drive an exterior gas flow along the exterior gas pathway (240) for gas transfer over the membrane;
a flow controller configured to selectively activate the air mover (244) to control transfer of a controlled component gas across the gas transfer membrane (230) from the interior side to the exterior side;
**characterized by**
a heater (246) upstream of the gas exchange portion (250) of the exterior gas pathway (240) to heat the exterior gas flow.

2. A refrigerated transport container (100) according to claim 1, further comprising a heater controller configured to vary heat input to the exterior gas flow based on monitoring a temperature of exterior gas.

3. A refrigerated transport container (100) according to claim 1, further comprising a heater controller configured to control the heater (246) to raise the temperature of the exterior gas by a threshold increase.

4. A refrigerated transport container (100) according to claim 2 or 3, further comprising a temperature sensor (248) configured to monitor a temperature of exterior gas conveyed along the exterior gas pathway (240).

5. A refrigerated transport container (100) according to any preceding claim, comprising:
a gas exchange chamber (222) separated from the cargo space (105) by a partition;
wherein the gas transfer membrane (230) is provided in the gas exchange chamber (222) so as to divide the gas exchange chamber (222) into a first volume (232) in communication with the interior side of the gas transfer membrane (230) and a second volume in communication with the exterior side of the gas transfer membrane (230);
wherein there are two openings in the partition, at least one of the openings being provided with a respective exchange valve (234) to selectively permit and prevent an exchange flow of interior gas from the cargo space (105) through the first volume (232) for gas transfer at the gas transfer membrane (230); and
an exchange controller configured to open and close the or each exchange valve (234) to control gas transfer between interior gas and exterior gas over the membrane.

6. A refrigerated transport container (100) according to claim 5, further comprising:
an evaporator (206) heat exchanger for receiving a return flow of interior gas from the cargo space (105) for cooling;
an evaporator fan (210) to drive the return flow;
wherein the evaporator fan (210) is configured to drive the exchange flow through the first volume (232).

7. A refrigerated transport container (100) according to claim 6, wherein the openings in the partition are configured so that in use the exchange flow branches from and re-joins the return flow.

8. A refrigerated transport container (100) according to any of claims 5 to 7, wherein the exchange controller is configured to switch between at least:
an idle mode in which the exchange controller operates at least one exchange valve (234) to be closed to prevent the exchange flow of interior gas from the cargo space (105) through the first volume (232); and
an active mode in which the exchange controller operates the or each exchange valve (234) to be open to permit the exchange flow of interior gas from the cargo space (105) through the first volume (232);
wherein the flow controller operates the fan to drive the exterior gas flow through the second volume in the active mode.

9. A method (300) of operating a refrigerated transport container (100) in accordance with any of claims 1-8, the method (300) comprising:
causing the air mover (244) to drive an exterior gas flow along the exterior gas pathway (240) for gas transfer of the controlled component gas from the interior side of the membrane to the exterior side of the membrane.

10. A method (300) according to claim 9, comprising activating the air mover (244) in response to determining that a level of the controlled component gas in the cargo space (105) is at or above an exchange threshold, and deactivating the air mover (244) in response to determining that a level of the controlled component gas in the cargo space (105) is at or below a deactivation threshold.

11. A method (300) according to claim 9 or 10, further comprising heating exterior gas upstream of the gas exchange portion (250) of the exterior gas pathway (240) using a heater (246).

12. A method (300) according to claim 11, wherein the air mover (244) is upstream of the gas exchange portion (250).

## Patentansprüche

1. Gekühlter Transportbehälter (100), umfassend:
einen Laderaum (105) zur Aufnahme eines inneren Gases;
eine Gastransfermembran (230), umfassend eine selektiv durchlässige Membran, die dafür gestaltet ist, Komponentengase mit unterschiedlichen Raten zu überführen, wobei die Gastransfermembran (230) eine Innenseite zum Aufnehmen von innerem Gas aus dem Laderaum (105) und eine Außenseite in Kommunikation mit einem Gasaustauschabschnitt (250) eines äußeren Gaswegs (240) aufweist;
eine Luftbewegungsvorrichtung (244), die dafür gestaltet ist, einen äußeren Gasstrom entlang des äußeren Gaswegs (240) zu treiben, um Gas über die Membran zu überführen;
einen Durchflussregler, der dafür gestaltet ist, die Luftbewegungsvorrichtung (244) selektiv zu aktivieren, um die Überführung eines regulierten Komponentengases durch die Gastransfermembran (230) von der Innenseite zu der Außenseite zu regulieren;
**gekennzeichnet durch**
eine Heizvorrichtung (246) stromaufwärts bezogen auf den Gasaustauschabschnitt (250) des äußeren Gaswegs (240) zum Erhitzen des äußeren Gasstroms.

2. Gekühlter Transportbehälter (100) gemäß Anspruch 1, ferner umfassend einen Heizvorrichtungsregler, der dafür gestaltet ist, die Wärmezufuhr zu dem äußeren Gasstrom auf Grundlage von Überwachung einer Temperatur von äußerem Gas zu variieren.

3. Gekühlter Transportbehälter (100) gemäß Anspruch 1, ferner umfassend einen Heizvorrichtungsregler, der dafür gestaltet ist, die Heizvorrichtung (246) zu regulieren, die Temperatur des äußeren Gases durch eine Schwellenwerterhöhung zu erhöhen.

4. Gekühlter Transportbehälter (100) gemäß Anspruch 2 oder 3, ferner umfassend einen Temperatursensor (248), der dafür gestaltet ist, eine Temperatur von äußerem Gas, das entlang des äußeren Gaswegs (240) befördert wird, zu überwachen.

5. Gekühlter Transportbehälter (100) gemäß einem der vorstehenden Ansprüche, umfassend:
eine Gasaustauschkammer (222), die durch eine Trennwand von dem Laderaum (105) getrennt ist;
wobei die Gastransfermembran (230) in der Gasaustauschkammer (222) bereitgestellt ist, um die Gasaustauschkammer (222) in ein erstes Volumen (232) in Kommunikation mit der Innenseite der Gastransfermembran (230) und ein zweites Volumen in Kommunikation mit der Außenseite der Gastransfermembran (230) zu teilen;
wobei in der Trennwand zwei Öffnungen vorhanden sind, wobei wenigstens eine der Öffnungen mit einem entsprechenden Austauschventil (234) versehen ist, um einen Austauschstrom von innerem Gas aus dem Laderaum (105) durch das erste Volumen (232) zur Gasüberführung an der Gastransfermembran (230) selektiv zu erlauben bzw. zu verhindern; und
einen Austauschregler, der dafür gestaltet ist, das oder jedes Austauschventil (234) zu öffnen und zu schließen, um Gasüberführung zwischen innerem Gas und äußerem Gas über die Membran zu regulieren.

6. Gekühlter Transportbehälter (100) gemäß Anspruch 5, ferner umfassend:
einen Verdampfer(206)-Wärmetauscher zum Aufnehmen eines Rückstroms von innerem Gas aus dem Laderaum (105) zur Kühlung;
ein Verdampfergebläse (210) zum Treiben des Rückstroms;
wobei das Verdampfergebläse (210) dafür gestaltet ist, den Austauschstrom durch das erste Volumen (232) zu treiben.

7. Gekühlter Transportbehälter (100) gemäß Anspruch 6, wobei die Öffnungen in der Trennwand so gestaltet sind, dass in Verwendung der Austauschstrom von dem Rückstrom abzweigt und zu ihm zurückkehrt.

8. gekühlter Transportbehälter (100) gemäß einem der Ansprüche 5 bis 7, wobei der Austauschregler dafür gestaltet ist, umzuschalten zwischen wenigstens:
einem Ruhemodus, bei dem der Austauschregler wenigstens ein Austauschventil (234) geschlossen hält, um zu verhindern, dass der Austauschstrom von innerem Gas aus dem Laderaum (105) durch das erste Volumen (232) fließt; und
einen aktiven Modus, bei dem der Austauschregler das oder jedes Austauschventil (234) offen hält, um zu erlauben, dass der Austauschstrom von innerem Gas aus dem Laderaum (105) durch das erste Volumen (232) fließt;
wobei der Austauschregler in dem aktiven Modus das Gebläse betreibt, um den äußeren Gasstrom durch das zweite Volumen zu treiben.

9. Verfahren (300) zum Betreiben eines gekühlten Transportbehälters (100) gemäß einem der Ansprüche 1-8, wobei das Verfahren (300) umfasst:
Bewirken, dass die Luftbewegungsvorrichtung (244) zur Gasüberführung des regulierten Komponentengases von der Innenseite der Membran zu der Außenseite der Membran einen äußeren Gasstrom entlang des äußeren Gaswegs (240) treibt.

10. Verfahren (300) gemäß Anspruch 9, umfassend Aktivieren der Luftbewegungsvorrichtung (244) in Antwort auf eine Bestimmung, dass eine Menge des regulierten Komponentengases in dem Laderaum (105) bei oder über einem Austauschschwellenwert liegt, und Deaktivieren der Luftbewegungsvorrichtung (244) in Antwort auf eine Bestimmung, dass eine Menge des regulierten Komponentengases in dem Laderaum (105) bei oder unter einem Deaktivierungsschwellenwert liegt.

11. Verfahren (300) gemäß Anspruch 9 oder 10, ferner umfassend Erhitzen von äußerem Gas stromaufwärts bezogen auf den Gasaustauschabschnitt (250) des äußeren Gaswegs (240) unter Verwendung einer Heizvorrichtung (246).

12. Verfahren (300) gemäß Anspruch 11, wobei die Luftbewegungsvorrichtung (244) stromaufwärts bezogen auf den Gasaustauschabschnitt (250) angeordnet ist.

## Revendications

1. Récipient de transport réfrigéré (100) comprenant :
un espace de chargement (105) destiné à contenir un gaz intérieur ;
une membrane de transfert de gaz (230) comprenant une membrane sélectivement perméable conçue pour transférer des composants gazeux à des vitesses différentes, la membrane de transfert de gaz (230) ayant un côté intérieur pour recevoir le gaz intérieur depuis l'espace de chargement (105) et un côté extérieur en communication avec une partie d'échange de gaz (250) d'un passage de gaz extérieur (240) ;
un dispositif de déplacement d'air (244) conçu pour entraîner un flux de gaz extérieur le long du passage de gaz extérieur (240) pour un transfert de gaz sur la membrane ;
un dispositif de commande de flux conçu pour activer sélectivement le dispositif de déplacement d'air (244) pour commander le transfert d'un composant gazeux contrôlé à travers la membrane de transfert de gaz (230) du côté intérieur au côté extérieur ;
**caractérisé par**
un dispositif de chauffage (246) en amont de la partie d'échange de gaz (250) du passage de gaz extérieur (240) pour chauffer le flux de gaz extérieur.

2. Récipient de transport réfrigéré (100) selon la revendication 1, comprenant en outre un dispositif de commande de dispositif de chauffage conçu pour faire varier la chaleur entrée dans le flux de gaz extérieur sur la base de la surveillance d'une température de gaz extérieur.

3. Récipient de transport réfrigéré (100) selon la revendication 1, comprenant en outre un dispositif de commande de dispositif de chauffage conçu pour commander le dispositif de chauffage (246) afin d'augmenter la température du gaz extérieur à hauteur d'une augmentation seuil.

4. Récipient de transport réfrigéré (100) selon la revendication 2 ou 3, comprenant en outre un capteur de température (248) conçu pour surveiller une température du gaz extérieur transporté le long du passage de gaz extérieur (240).

5. Récipient de transport réfrigéré (100) selon l'une quelconque revendication précédente, comprenant :
une chambre d'échange de gaz (222) séparée de l'espace de chargement (105) par une cloison ;
dans lequel la membrane de transfert de gaz (230) est prévue dans la chambre d'échange de gaz (222) de sorte à diviser la chambre d'échange de gaz (222) en un premier volume (232) en communication avec le côté intérieur de la membrane de transfert de gaz (230) et un second volume en communication avec le côté extérieur de la membrane de transfert de gaz (230) ;
dans lequel il y a deux ouvertures dans la cloison, au moins une des ouvertures étant pourvue d'une soupape d'échange (234) respective pour permettre et empêcher sélectivement un flux d'échange de gaz intérieur depuis l'espace de chargement (105) à travers le premier volume (232) pour un transfert de gaz au niveau de la membrane de transfert de gaz (230) ; et
un dispositif de commande d'échange conçu pour ouvrir et fermer la ou chaque soupape d'échange (234) pour commander le transfert de gaz entre le gaz intérieur et le gaz extérieur sur la membrane.

6. Récipient de transport réfrigéré (100) selon la revendication 5, comprenant en outre :
un échangeur de chaleur d'évaporateur (206) pour recevoir un flux de retour de gaz intérieur provenant de l'espace de chargement (105) pour un refroidissement ;
un ventilateur (210) d'évaporateur pour entraîner le flux de retour ;
dans lequel le ventilateur (210) d'évaporateur est conçu pour entraîner le flux d'échange à travers le premier volume (232).

7. Récipient de transport réfrigéré (100) selon la revendication 6, dans lequel les ouvertures de la cloison sont conçues de sorte que, lors de l'utilisation, le flux d'échange se sépare du flux de retour et rejoigne celui-ci.

8. Récipient de transport réfrigéré (100) selon l'une quelconque des revendications 5 à 7, dans lequel le dispositif de commande d'échange est conçu pour commuter entre au moins :
un mode inactif dans lequel le dispositif de commande d'échange actionne au moins une soupape d'échange (234) pour qu'elle soit fermée afin d'empêcher le flux d'échange de gaz intérieur depuis l'espace de chargement (105) à travers le premier volume (232) ; et
un mode actif dans lequel le dispositif de commande d'échange actionne la ou chaque soupape d'échange (234) pour qu'elle soit ouverte afin de permettre le flux d'échange de gaz intérieur depuis l'espace de chargement (105) à travers le premier volume (232) ;
dans lequel le dispositif de commande de débit fait fonctionner le ventilateur pour entraîner le débit de gaz extérieur à travers le second volume dans le mode actif.

9. Procédé (300) de fonctionnement d'un récipient de transport réfrigéré (100) selon l'une quelconque des revendications 1 à 8, le procédé (300) comprenant :
le fait d'amener le dispositif de déplacement d'air (244) à entraîner un flux de gaz extérieur le long du passage de gaz extérieur (240) pour le transfert de gaz du composant gazeux contrôlé du côté intérieur de la membrane au côté extérieur de la membrane.

10. Procédé (300) selon la revendication 9, comprenant l'activation du dispositif de déplacement d'air (244) en réponse à la détermination qu'un niveau du composant gazeux contrôlé dans l'espace de chargement (105) est égal ou supérieur à un seuil d'échange, et la désactivation du dispositif de déplacement d'air (244) en réponse à la détermination qu'un niveau du composant gazeux contrôlé dans l'espace de chargement (105) est égal ou inférieur à un seuil de désactivation.

11. Procédé (300) selon la revendication 9 ou 10, comprenant en outre le chauffage du gaz extérieur en amont de la partie d'échange de gaz (250) du passage de gaz extérieur (240) en utilisant un dispositif de chauffage (246).

12. Procédé (300) selon la revendication 11, dans lequel le dispositif de déplacement d'air (244) est en amont de la partie d'échange de gaz (250).
